# EUROPEAN PATENT APPLICATION

(11) **EP 4 723 344 A1**
(43) Date of publication of application: **08.04.2026**
(21) Application number: 25205458.0
(22) Date of filing: 29.09.2025
(51) Int. Cl.: H01M 50/325, H01M 50/552, H01M 50/147

(54) **VENTING APPARATUS, SECONDARY BATTERY, AND METHOD OF MANUFACTURING SECONDARY BATTERY**

(30) Priority: 07.10.2024 KR 20240136099
(71) Applicant: SAMSUNG SDI CO., LTD., Yongin-si, Gyeonggi-do 17084 (KR)
(72) Inventor: KIM, Hyeonggeun, 17084 Yongin-si (KR)
(74) Representative: Marks & Clerk LLP

(57) **Abstract**

A venting apparatus for a secondary battery includes a spring having a top end and a bottom end, a sub-terminal plate connected to the top end of the spring, the sub-terminal plate being under a terminal plate having a vent, a vent plate connected to the bottom end of the spring, the vent plate having high and low positions changeable in response to a pressure within the secondary battery, and a discharge preventer on an opening of a case of the secondary battery, the discharge preventer being between the vent plate and the opening of the case, and the discharge preventer being configured to prevent a discharge of a material other than a gas within the secondary battery.

## Description

### BACKGROUND

### 1. Field

The present disclosure relates to a venting apparatus, a secondary battery, and a method of manufacturing a secondary battery, and more particularly, to a venting apparatus which enables a gas within a secondary battery to be discharged at specific internal pressure or more, a secondary battery, and a method of manufacturing a secondary battery.

### 2. Description of the Related Art

Unlike primary batteries that are not designed to be recharged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly having a positive electrode and a negative electrode, a case that accommodates the electrode assembly, a terminal part connected to the electrode assembly, a vent to exhaust gases generated inside the case, etc.

The above information disclosed in this Background section is for enhancement of understanding of the background of the present disclosure, and therefore, it may contain information that does not constitute related (or prior) art.

### SUMMARY

A venting apparatus according to embodiments of the present disclosure may include a spring having a top connected to a sub-terminal plate disposed under a terminal plate having a vent that enables a gas within a secondary battery to be discharged, a vent plate connected to the bottom of the spring and having a high and low position changed in response to pressure within the secondary battery, and a discharge prevention member disposed on an opening of a case of the secondary battery under the vent plate and configured to prevent the discharge of a material other than a gas within the secondary battery.

In embodiments, when the pressure within the secondary battery is a preset pressure or more, the vent plate may rise in the direction of the sub-terminal plate as the spring is compressed.

In embodiments, when the pressure within the secondary battery is the preset pressure or more, a predetermined interval may be formed between the vent plate and the discharge prevention member.

In embodiments, the spring may set optimal pressure within the secondary battery through the elasticity of the spring.

In embodiments, the venting apparatus may further include a valve that is connected to the sub-terminal plate through the terminal plate.

In embodiments, the valve may adjust a preset pressure that is a criterion for the change in the high and low position of the vent plate in proportion to the number of rotations of the valve.

In embodiments, the discharge prevention member may include a hydrophobic porous material.

A secondary battery according to embodiments of the present disclosure may include an electrode structure, a case in which the electrode structure is accommodated, a terminal plate combined with the case and having a vent that enables a gas within the secondary battery to be discharged, a sub-terminal plate disposed under the terminal plate, a spring having a top connected to the sub-terminal plate, a vent plate connected to the bottom of the spring and having a high and low position changed in response to pressure within the secondary battery, and a discharge prevention member disposed on an opening of the case of the secondary battery under the vent plate and configured to prevent the discharge of a material other than the gas within the secondary battery.

In embodiments, when the pressure within the secondary battery is a preset pressure or more, the vent plate may rise in the direction of the sub-terminal plate as the spring is compressed.

In embodiments, when the pressure within the secondary battery is the preset pressure or more, a predetermined interval may be formed between the vent plate and the discharge prevention member.

In embodiments, the spring may set optimal pressure within the secondary battery through the elasticity of the spring.

In embodiments, the secondary battery may further include a valve that is connected to the sub-terminal plate through the terminal plate.

In embodiments, the valve may adjust a preset pressure that is a criterion for the change in the high and low position of the vent plate in proportion to the number of rotations of the valve.

In embodiments, the discharge prevention member may include a hydrophobic porous material.

A method of manufacturing a secondary battery according to embodiments of the present disclosure may include providing an electrode structure, accommodating the electrode structure in a case, providing, on an opening of the case, a discharge prevention member that prevents the discharge of a material other than a gas within the secondary battery, providing, on the discharge prevention member, a vent plate having a high and low position changed in response to pressure within the secondary battery, providing a spring, connecting the vent plate to the bottom of the spring, connecting a sub-terminal plate to the top of the spring, providing, at the top of the sub-terminal plate, a terminal plate including a vent that enables the gas within the secondary battery to be discharged, and combining the terminal plate and the case.

In embodiments, the providing of the vent plate may include providing the vent plate so that the vent plate rises in the direction of the sub-terminal plate as the spring is compressed when the pressure within the secondary battery is a preset pressure or more.

In embodiments, the providing of the vent plate so that the vent plate rises in the direction of the sub-terminal plate may include providing the vent plate so that a predetermined interval is formed between the vent plate and the discharge prevention member when the pressure within the secondary battery is the preset pressure or more.

In embodiments, the providing of the spring may include setting optimal pressure within the secondary battery through the elasticity of the spring.

In embodiments, the method may further include providing a valve that is connected to the sub-terminal plate through the terminal plate.

In embodiments, the providing of the valve may further include adjusting a preset pressure that is a criterion for the change in the high and low position of the vent plate in proportion to the number of rotations of the valve.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1A is an upper perspective view of a cylindrical secondary battery;
FIG. 1B is a cross-sectional view of a cylindrical secondary battery;
FIG. 2A is an upper perspective view of a prismatic secondary battery;
FIG. 2B is a cross-sectional view taken along line I-I' in FIG. 2A;
FIG. 3 is a graph illustrating pressure within a battery according to a comparative vent structure for a secondary battery;
FIG. 4 is a diagram illustrating a venting apparatus according to embodiments of the present disclosure;
FIG. 5A is a diagram illustrating a position of a vent plate when pressure within a secondary battery is less than a set pressure according to embodiments of the present disclosure;
FIG. 5B is a diagram illustrating a position a vent plate when pressure within a secondary battery is a set pressure or more according to embodiments of the present disclosure;
FIG. 6 is a diagram illustrating a venting apparatus that has been applied to a prismatic battery according to embodiments of the present disclosure; and
FIG. 7 is a flowchart illustrating a method of manufacturing a secondary battery according to embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The type of secondary battery hereinafter may refer to a coin type, a cylindrical type, a prismatic type, a pouch type, etc. Prior to a description of embodiments of the present disclosure, cylindrical and prismatic secondary batteries are described because the present disclosure may be applied to the cylindrical and prismatic secondary batteries.

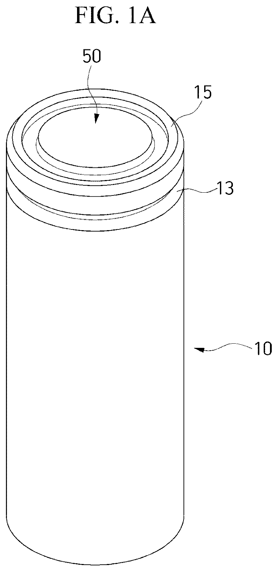

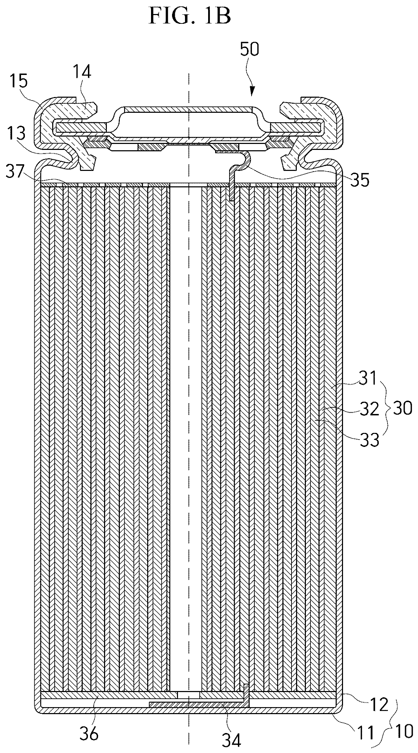

FIG. 1A is an upper perspective view of a cylindrical secondary battery. FIG. 1B is a cross-sectional view of the cylindrical secondary battery in FIG. 1A.

Referring to FIG. 1A and FIG. 1B, the cylindrical secondary battery may include an electrode assembly 30, a case 10 that accommodates the electrode assembly 30 and an electrolyte therein, a cap assembly 50 that is connected to an opening of the case 10 and that seals the case 10, and an insulating plate 37 disposed between the electrode assembly 30 and the cap assembly 50 within the case 10.

The electrode assembly 30 may include a separator 32 between a first electrode 33 and a second electrode 31, and may be wound in a jelly-roll form.

The first electrode 33 may include a first base and a first active material layer disposed on the first base. A first lead tab 35 may be extended from a first uncoated part of the first base (in which the first active material layer is not disposed) to the outside. The first lead tab 35 may be electrically connected to the cap assembly 50.

The second electrode 31 may include a second base and a second active material layer disposed on the second base. A second lead tab 34 may be extended from a second uncoated part of the second base (in which the second active material layer is not disposed) to the outside. The second lead tab 34 may be electrically connected to the case 10. The first lead tab 35 and the second lead tab 34 may be extended in opposite directions.

The first electrode 33 may function as a positive electrode. In this case, the first base may be composed of, e.g., aluminum foil. The first active material layer may include, e.g., transition metal oxide. The second electrode 31 may function as a negative electrode. In this case, the second base may be composed of, e.g., copper foil or nickel foil. The second active material layer may include, e.g., graphite.

The separator 32 permits a movement of lithium ions and prevents a short-circuit between the first electrode 33 and the second electrode 31. The separator 32 may be composed of, e.g., a polyethylene film, a polypropylene film, or a polyethylene-polypropylene film. The case 10 may accommodate the electrode assembly 30 and an electrolyte, and may form an external shape of the secondary battery along with the cap assembly 50.

The case 10 may include a body part 12 having an approximate cylindrical shape and a bottom part 11 connected to one side of the body part 12. A beading part 13 that has been deformed toward the inside of the body part 12 may be disposed in the body part 12. A crimping part 15 that has been bent toward the inside of the body part 12 may be disposed at an end of the body part 12 at the opening side.

The beading part 13 may suppress a movement of the electrode assembly 30 within the case 10, and may facilitate positioning of a gasket 14 and the cap assembly 50. The crimping part 15 may firmly fix the cap assembly 50 by pressurizing (e.g., pressing) an edge of the cap assembly 50 through the gasket 14. The case 10 may be made of, e.g., iron plated with nickel.

The cap assembly 50 may seal the case 10 by being fixed to the inside of the crimping part 15 through the gasket 14. The cap assembly 50 may include a cap-up part, a safety vent, a cap-down part, an insulating member, and a sub-plate. The cap assembly 50 may be variously deformed.

The cap-up part may be disposed at the top of the cap assembly 50. The cap-up part may include a terminal part that protrudes convexly upward and that is connected to an external circuit. An output for discharging a gas around the terminal part may be disposed in the cap-up part.

The safety vent may be disposed under the cap-up part. The safety vent may include a protruding part that protrudes convexly downward and that is connected to the sub-plate. At least one notch may be disposed around the protruding part.

When a gas is generated due to over-charging or an abnormal operation of the secondary battery, the protruding part may be deformed upward by the pressure of the gas and separated from the sub-plate. Furthermore, the safety vent may be cut along the notch. The cut safety vent may prevent the explosion of the secondary battery by discharging the gas to the outside.

The cap-down part may be disposed under the safety vent. A first opening for exposing the protruding part of the safety vent and a second opening for discharging a gas may be disposed in the cap-down part. The insulating member may be disposed between the safety vent and the cap-down part, and may insulate the safety vent and the cap-down part.

The sub-plate may be disposed under the cap-down part. The sub-plate may be fixed to the bottom of the cap-down part in order to close the first opening of the cap-down part. The protruding part of the safety vent may be fixed to the sub-plate. The first lead tab 35 that has been withdrawn from the electrode assembly 30 may be fixed to the sub-plate. Accordingly, the cap-up part, the safety vent, the cap-down part, and the sub-plate may be electrically connected to the first electrode 33 of the electrode assembly 30.

The insulating plate 37 may be disposed to adjoin the electrode assembly 30 under the beading part 13. A tab opening for withdrawing the first lead tab 35 may be provided in the insulating plate 37. The cap assembly 50 that has been electrically connected to the first electrode 33 by the first lead tab 35 may face the electrode assembly 30 with the insulating plate 37 interposed therebetween. The cap assembly 50 may maintain the state in which the cap assembly 50 has been insulated from the electrode assembly 30 by the insulating plate 37. The cylindrical secondary battery may include another insulating plate 36 for insulation between the electrode assembly 30 and the bottom part 11 of the case 10.

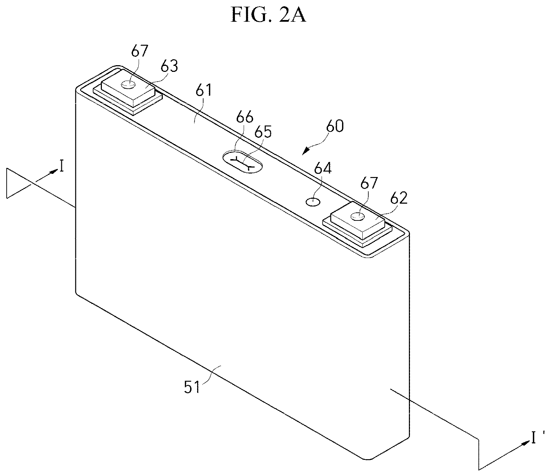

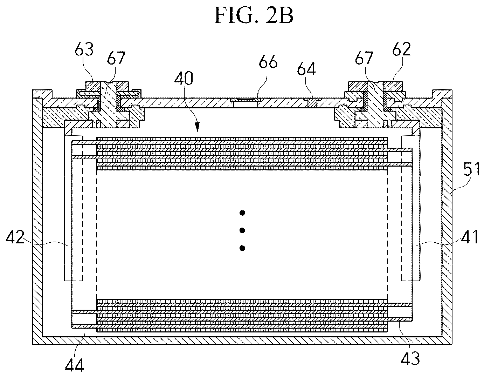

FIG. 2A is a top perspective view of a prismatic secondary battery. FIG. 2B is a cross-sectional view taken along line I-I' of FIG. 2A.

Referring to FIG. 2A, a case 51 may define an overall appearance of the prismatic secondary battery, and may be made of a conductive metal, e.g., aluminum, aluminum alloy, or nickel-plated steel. In addition, the case 51 may provide a space for accommodating an electrode assembly therein.

A cap assembly 60 may include a cap plate 61 that covers the opening of the case 51. In some examples, the case 51 and the cap plate 61 may be made of a conductive material. Here, a first terminal 62 and a second terminal 63 may be electrically connected to respective positive and negative (or negative and positive) electrodes inside the case 51, and may be installed to protrude outward through the cap plate 61.

The cap plate 61 may be equipped with an electrolyte injection port 64 formed to install a sealing plug (or seal pin), and a vent 66 formed with a notch 65. The vent 66 may discharge gas generated inside the secondary battery.

With reference to FIG. 2B, the prismatic secondary battery may include an electrode assembly 40, a first current collector 41, the first terminal 62, a second current collector 42, the second terminal 63, the case 51, and the cap assembly 60.

The electrode assembly 40 may be formed by winding or stacking a stack of a first electrode plate, a separator, and a second electrode plate, which are formed as thin plates or films. For example, when the electrode assembly 40 is a wound stack, a winding axis may be parallel to the longitudinal direction of the case 51. In another example, the electrode assembly 40 may be a stack type rather than a winding type. In yet another example, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case. The first electrode plate of the electrode assembly may act as a negative electrode, and the second electrode plate may act as a positive electrode, e.g., the reverse is also possible.

The first electrode plate may be formed by applying a first electrode active material, e.g., graphite, carbon, or the like, to a first electrode current collector formed of a metal foil, e.g., copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, e.g., a transition metal oxide, on a second electrode current collector formed of a metal foil, e.g., aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab 43 may be located on the left side of the electrode assembly 40, and the second electrode tab 44 may be located on the right side of the electrode assembly 40. In some other embodiments, the first electrode tab 43 and the second electrode tab 44 may be located on one side of the electrode assembly 40 in the same direction. Here, for convenience of description, the left and right sides are defined according to the secondary battery as oriented in FIG. 2B, and the positions thereof may change when the secondary battery is rotated left and right or up and down.

The separator prevents or substantially reduces instances of a short circuit between the first electrode and the second electrode while allowing movement of lithium ions therebetween. The separator may be made of, e.g., a polyethylene film, a polypropylene film, a polyethylene-polypropylene film, or the like.

The first electrode tab 43 of the first electrode plate and the second electrode tab 44 of the second electrode plate may be positioned at both ends (e.g., opposite ends) of the electrode assembly 40. In some embodiments, the electrode assembly 40 may be accommodated in the case 51 along with an electrolyte.

In addition, in the electrode assembly 40, the first current collector 41 and the second current collector 42 may be welded and connected to the first electrode tab 43 of the first electrode plate and the second electrode tab 44 of the second electrode plate exposed on both sides, respectively, to then be positioned thereat, respectively. The first current collector 41 and the second current collector 42 may be connected to the first terminal 62 and the second terminal 63 described with reference to FIG. 2A, through terminal pins 67, respectively. For example, outer circumference surfaces of the terminal pins 67 may be subjected to screw processing, and may be fastened to the first terminal 62 and the second terminal 63, respectively, through screw coupling. In another example, the terminal pins 67 may be connected to the first terminal 62 and the second terminal 63 in a riveting way or by welding.

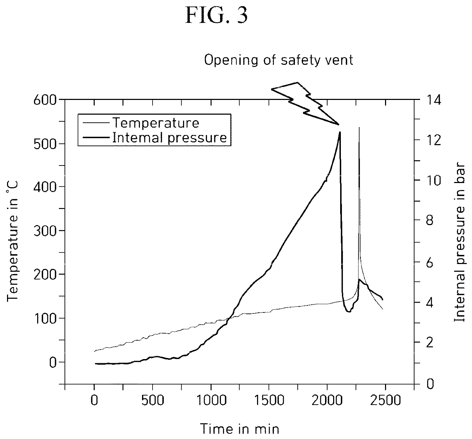

FIG. 3 is a graph illustrating pressure within a secondary battery according to a comparative structure for a secondary battery.

In general, a battery thermal runaway phenomenon may include various overlapping heat generation phenomena that may be different from each other in terms of temperature and heat generation energy. For example, when a self heat-generation phenomenon at an initial low temperature is fast to the extent that the self heat-generation phenomenon leads to a series of heat-generation reactions and the generated energy is great, a battery may be subjected to thermal runaway. In another example, when an initial self heat-generation phenomenon is slow and the generated energy is small, a battery may be cooled because the initial self heat-generation phenomenon does not lead to additional heat generation.

Referring to the graph of FIG. 3, a comparative vent structure for a secondary battery may be ruptured when pressure within the battery reaches a predetermined pressure. That is, the comparative vent structure may have a form in which, when thermal runaway occurs in the secondary battery, a vent plate may be broken, thereby reducing pressure within the secondary battery to prevent constant pressure rise within the secondary battery and to avoid reaching breaking pressure.

Materials, such as dimethyl carbonate (DMC) and ethyl methyl carbonate (EMC), which are used as electrolytes, may have boiling temperatures of about 100 °C (90°C and 107°C, respectively) at 1 atmosphere, which are lower than a self heat-generation start temperature (~ 130°C) of a secondary battery. A boiling phenomenon of a liquid may be an isothermal process. This means that if pressure within a secondary battery is maintained at 1 atmosphere, a temperature within the secondary battery is maintained at about 100 °C until the boiling of DMC or EMC is finished. In this case, the occurrence of an additional heat generation phenomenon at a high temperature can be suppressed.

In the comparative vent structure for a secondary battery, an additional heat generation phenomenon may occur at a high temperature, while the phase of an electrolyte is changed, because pressure within the secondary battery constantly rises even at a boiling temperature due to a constant increase of the pressure. This means that an isothermal endothermic phenomenon attributable to the boiling of an electrolyte is not effectively used to prevent the thermal runaway of the secondary battery.

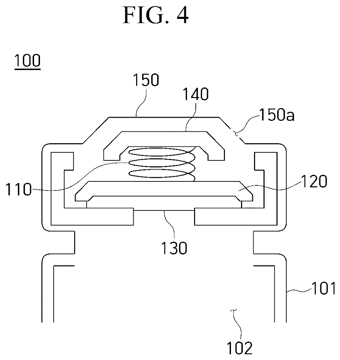

FIG. 4 is a diagram illustrating a venting apparatus 100 according to embodiments of the present disclosure.

Referring to FIG. 4, the venting apparatus 100 according to embodiments of the present disclosure may include a spring 110, a vent plate 120, a discharge prevention member 130 (e.g., a discharge preventer), a sub-terminal plate 140, and a terminal plate 150. For example, the terminal plate 150 may be part of a cap-up part of a cap assembly sealing a case 101, and may include a vent 150a that enables gas within a secondary battery to be discharged.

The top (e.g., top end) of the spring 110 may be connected to the sub-terminal plate 140 disposed under the terminal plate 150. The vent plate 120 may be connected to the bottom (e.g., bottom end) of the spring 110. For example, referring to FIG. 4, the spring 110 may extend lengthwise between the vent plate 120 and the sub-terminal plate 140, e.g., the spring 110 may extend and contract along a vertical direction that is normal with respect to the vent plate 120. The high and low positions of the vent plate 120 may be changed (e.g., changeable) in response to pressure within the secondary battery, e.g., the vent plate 120 may be movable along the vertical direction to vary its distance relative to the electrode assembly 102 in response to pressure within the case 101 of the secondary battery.

Furthermore, the spring 110 may set optimal pressure within the secondary battery through the elasticity of the spring. In this case, the vent plate 120 may rise (e.g., move away from the electrode assembly 102 to be at a high position) in the direction of the sub-terminal plate 140, as the spring 110 is compressed when pressure within the secondary battery is at a preset pressure or more. That is, during normal operation, the spring 110 may prevent an internal material within the secondary battery from leaking to the outside by being extended and pressing the vent plate 120 toward the electrode assembly (i.e., away from the sub-terminal plate 140 to be at a low position). However, when pressure within the secondary battery rises to the preset pressure or more, the vent plate 120 may be lifted up (e.g., move toward the sub-terminal plate 140 and compress the spring 110) to form a passage through which air escapes. Accordingly, a gas can be discharged to the outside through the passage, and a pressure rise can be prevented.

Furthermore, when pressure within the secondary battery is at the preset pressure or more, a predetermined interval (e.g., a predetermined distance) may be formed between the vent plate 120 and the discharge prevention member 130 (e.g., after the vent plate 120 is lifted up). The passage through which gas is discharged through the vent of the terminal plate 150 may be formed due to the predetermined interval between the vent plate 120 and the discharge prevention member 130.

The discharge prevention member 130 may be disposed on an opening of the cap assembly facing the electrode assembly (e.g., the discharge prevention member 130 may vertically overlap and completely cover the opening of the cap assembly), and under the vent plate 120. For example, referring to FIG. 4, the discharge prevention member 130 may be on an inner bottom surface of the cap assembly, e.g., the discharge prevention member 130 may be between the inner bottom surface of the cap assembly and the vent plate 120. For example, referring to FIG. 4, the vent plate 120 may vertically overlap and cover a surface of the discharge prevention member 130 that faces away from the electrode assembly. The discharge prevention member 130 may prevent the discharge of a material other than gas within the secondary battery, e.g., prevent discharge of an electrolyte or some solid particles in the secondary battery. The discharge prevention member 130 may prevent another material, e.g., an electrolyte other than an internal gas, from being discharged. In embodiments, the discharge prevention member 130 may include a hydrophobic porous material, and may prevent the discharge of a material other than gas within the secondary battery.

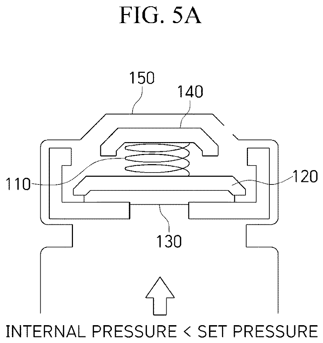

FIG. 5A is a diagram illustrating the position of the vent plate 120 when pressure within the secondary battery is less than a preset pressure (e.g., during normal operation) according to embodiments of the present disclosure.

Referring to FIG. 5A, the position of the vent plate 120 may be changed in response to pressure within the secondary battery. When pressure within the secondary battery is lower than the preset pressure, the length of the spring 110 along the vertical direction may be maximized, and the vent plate 120 may be disposed on (e.g., directly on) the discharge prevention member 130, thereby preventing the discharge of all of materials.

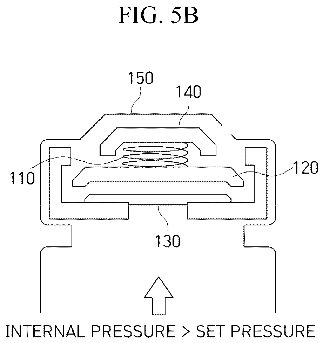

FIG. 5B is a diagram illustrating the position of the vent plate 120 when pressure within a secondary battery is at a preset pressure or more (e.g., during increased pressure operation) according to embodiments of the present disclosure.

Referring to FIG. 5B, the position of the vent plate 120 may be changed in response to pressure within the secondary battery. When pressure within the secondary battery is at the preset pressure or more, the vent plate 120 may rise in the direction of the sub-terminal plate 140 (e.g., the increased pressure pushes the vent plate 120 away from discharge prevention member 130) and compress the spring 110. Furthermore, as the vent plate 120 rises in the direction of the sub-terminal plate 140, a predetermined interval may be formed between the vent plate 120 and the discharge prevention member 130, so that a passage through which gas passes may be formed. The discharge prevention member 130 can prevent the discharge of a material other than gas through the hydrophobic porous material, e.g., gas may be discharged through the hydrophobic porous material of the discharge prevention member 130.

The structure of the vent plate 120 according to embodiments of the present disclosure may be changed so that pressure within the secondary battery does not rise to a predetermined limit or more when the secondary battery is self-heated at specific pressure or more within the secondary battery. Furthermore, during normal operation, when pressure within the secondary battery is less than the preset (e.g., predetermined pressure), the spring 110 may prevent an internal material within the secondary battery from leaking to the outside by pressing the vent plate 120.

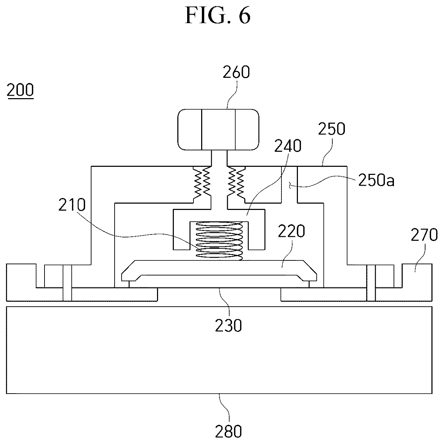

FIG. 6 is a diagram illustrating a venting apparatus 200 applied to a prismatic secondary battery according to embodiments of the present disclosure.

Referring to FIG. 6, the venting apparatus 200 may include a spring 210, a vent plate 220, a discharge prevention member 230, a sub-terminal plate 240, a terminal plate 250, and a valve 260. Furthermore, the venting apparatus 200 may be connected to a case 270 that surrounds an electrode assembly 280. A method of connecting the venting apparatus 200 and the case 270 may include various methods, e.g., a connection through welding and a connection through a screw.

In the prismatic secondary battery, unlike in a cylindrical secondary battery, the venting apparatus 200 may be an independent and standardized vent structure capable of adjusting the pressure of a vent. The venting apparatus 200 may be installed in a spatial margin of the secondary battery.

A standardized venting apparatus has a structure in which a valve is connected to a spring. In such a structure, a preset pressure may be set based on the number of rotations of the valve. Although reference pressure at which an irreversible reaction occurs upon thermal runaway is different depending on the capacity or construction of a secondary battery, the venting apparatus 200 according to embodiments of the present disclosure can adjust the reference pressure.

Referring to FIG. 6, the top of the spring 210 may be connected to the sub-terminal plate 240 disposed under the terminal plate 250 having a vent 250a that enables a gas within the secondary battery to be discharged. The vent plate 220 may be connected to the bottom of the spring 210. The high and low position of the vent plate may be changed in response to pressure within the secondary battery. Furthermore, the spring 210 may set optimal pressure within the secondary battery through the elasticity of the spring.

In this case, when pressure within the secondary battery is the preset pressure or more, the vent plate 220 may rise in the direction of the sub-terminal plate 240 as the spring 210 is compressed. That is, at normal times, the spring 210 can prevent an internal material within the secondary battery from leaking to the outside by pressing the vent plate 220. However, when pressure within the secondary battery rises to the preset pressure or more, the vent plate 220 may be lifted up to form a passage through which the air escapes, so that gas can be discharged to the outside and a pressure rise can be prevented.

Furthermore, when pressure within the secondary battery is the preset pressure or more, a predetermined interval may be formed between the vent plate 220 and the discharge prevention member 230. A passage through which gas is discharged through the vent of the terminal plate 250 may be formed due to the predetermined interval between the vent plate 220 and the discharge prevention member 230.

The venting apparatus 200 may further include the valve 260 that is connected to the sub-terminal plate 240 through the terminal plate 250, e.g., the valve 260 may extend through the terminal plate 250 to directly contact the sub-terminal plate 240. In embodiments, the valve 260 may adjust the preset pressure, i.e., a criterion for a change in the high and low position of the vent plate 220, in proportion to the number of rotations of the valve 260.

The discharge prevention member 230 may be disposed on the opening of the case 270 of the secondary battery under the vent plate 220, and may prevent the discharge of a material other than a gas within the secondary battery. An electrolyte or some solid particles may be included in the secondary battery. The discharge prevention member 230 may prevent another material, such as an electrolyte other than a gas within the secondary battery, from being discharged to the outside. In embodiments, the discharge prevention member 230 may include a hydrophobic porous material, and may prevent the discharge of a material other than a gas within the secondary battery.

Furthermore, a secondary battery, such as that illustrated in FIGS. 1A to 2B, may be constructed by using the venting apparatus 100 or the venting apparatus 200 according to embodiments of the present disclosure.

The secondary battery may include the electrode assembly 280, the case 270 in which the electrode assembly 280 is accommodated, the terminal plate 250, the sub-terminal plate 240, the spring 210, the vent plate 220, and the discharge prevention member 230.

The terminal plate may be combined with the case, and may include a vent that enables gas within the secondary battery (or within the case) to be discharged. The sub-terminal plate may be disposed under the terminal plate. The top of the spring may be connected to the sub-terminal plate. The spring may set optimal pressure within the secondary battery through the elasticity of the spring. The vent plate may be connected to the bottom of the spring. The high and low position of the vent plate may be changed in response to pressure within the secondary battery.

Furthermore, the discharge prevention member may be disposed on the opening of the case of the secondary battery under the vent plate, and can prevent the discharge of a material other than a gas within a battery cell. The discharge prevention member may be disposed on the opening of the case of the secondary battery under the vent plate, and can prevent the discharge of a material other than a gas within the secondary battery.

In this case, when pressure within the secondary battery is preset pressure or more, the vent plate may rise in the direction of the sub-terminal plate as the spring is compressed. Furthermore, when pressure within the secondary battery is preset pressure or more, a predetermined interval may be formed between the vent plate and the discharge prevention member. A passage through which a gas is discharged through the vent of the terminal plate may be formed due to the predetermined interval between the vent plate and the discharge prevention member.

The venting apparatus may further include the valve that is connected to the sub-terminal plate through the terminal plate. The valve may adjust preset pressure, that is, a criterion for a change in the high and low position of the vent plate, in proportion to the number of rotations of the valve. The discharge prevention member may include the hydrophobic porous material, and can prevent the discharge of a material other than a gas within the secondary battery.

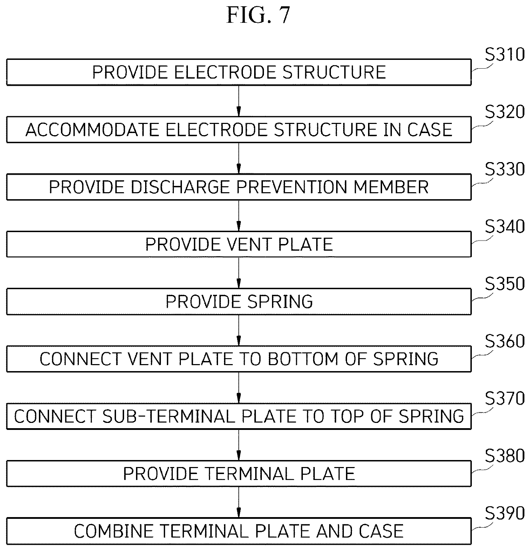

FIG. 7 is a flowchart illustrating a method of manufacturing a secondary battery according to embodiments of the present disclosure.

Referring to FIG. 7, the method of manufacturing a secondary battery may include providing an electrode structure (e.g., an electrode assembly) (S310), accommodating the electrode structure in the case (S320), providing the discharge prevention member that prevents the discharge of a material other than a gas within the secondary battery on the opening of the case (S330), providing, on the discharge prevention member, the vent plate, the high and low position of which is changed in response to pressure within the secondary battery (S340), providing the spring on the vent plate (S350), connecting the vent plate to the bottom of the spring (S360), connecting the sub-terminal plate to the top of the spring (S370), providing, at the top of the sub-terminal plate, the terminal plate having the vent that enables a gas within the secondary battery to be discharged (S380), and combining the terminal plate and the case (S390).

The terminal plate may be combined with the case, and may include the vent that enables a gas within the secondary battery to be discharged. The sub-terminal plate may be disposed under the terminal plate.

The top of the spring may be connected to the sub-terminal plate. The spring may set optimal pressure within the secondary battery through the elasticity of the spring.

The vent plate may be connected to the bottom of the spring. The high and low position of the vent plate may be changed in response to pressure within the secondary battery.

Furthermore, the discharge prevention member may be disposed on the opening of the case of the secondary battery under the vent plate, and can prevent the discharge of a material other than a gas within a battery cell.

The discharge prevention member may be disposed on the opening of the case of the secondary battery under the vent plate, and can prevent the discharge of a material other than a gas within the secondary battery.

In this case, when pressure within the secondary battery is preset pressure or more, the vent plate may rise in the direction of the sub-terminal plate as the spring is compressed.

Furthermore, when pressure within the secondary battery is preset pressure or more, a predetermined interval may be formed between the vent plate and the discharge prevention member. A passage through which a gas is discharged through the vent of the terminal plate may be formed due to the predetermined interval between the vent plate and the discharge prevention member.

The venting apparatus may further include the valve that is connected to the sub-terminal plate through the terminal plate.

The valve may adjust preset pressure, that is, a criterion for a change in the high and low position of the vent plate, in proportion to the number of rotations of the valve.

The discharge prevention member may include the hydrophobic porous material, and can prevent the discharge of a material other than a gas within the secondary battery.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel oxide, lithium cobalt oxide, lithium manganese oxide, a lithium ferrous phosphate compound, cobalt-free nickel-manganese oxide, or a combination of them.

For example, a compound that is represented as one of the following chemical formulas may be used. LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}Co_{b}X_{c}O_{2α}D'_{α} (0.90≤a≤1.8, 0≤b≤0.5, 0≤c≤0.5, 0<α<2); LiₐNi_{1-b-c}Mn_{b}X _{c}O_{2-α}D'_{α} (0.90≤a≤1.8, 0≤b≤0.5, 0≤c≤0.5, 0<α<2); LiₐNi_{b}Co_{c}Ll_{d}GeO₂ (0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoGbO₂ (0.90≤a≤1.8, 0.001≤b≤0.1); LiₐM_{n1-b}G_{b}O₂ (0.90≤a≤1.8, 0.001≤b≤0.1); LiₐMn₂G_{b}O₄ (0.90≤a≤1.8, 0.001≤b≤0.1); LiₐM_{n1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D' may be O, F, S, P, or a combination of them. G may be Al, Cr, Mn, Fe, Mg, La, Ce, Sr, V, or a combination of them. L1 may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to 100 wt.% of the positive electrode active material layer. Content of the binder and the conductive material may be 0.5 wt.% to 5 wt.% with respect to the 100 wt.% of the positive electrode active material layer.

Al may be used as the current collector, but the present disclosure may not be limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si negative electrode active material or an Sn negative electrode active material may be used as the material capable of doping and dedoping with respect to lithium. The Si negative electrode active material may be silicon, a silicon-carbon composite, SiOₓ (0<x<2), a Si alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example, the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous binder, an aqueous binder, a dry binder, or a combination of them may be used as the binder. If the aqueous binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate, ester, ether, ketone, or alcohol solvent, an aprotic solvent, or a combination of them. The carbonate, ester, ether, ketone, or alcohol solvent, or the aprotic solvent may be used solely, or two types or more of them may be mixed and used as the nonaqueous organic solvent.

Furthermore, if the carbonate solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride heavy antibody or (meth)acrylic polymer.

The inorganic matter may include inorganic particles selected among Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked

By way of summation and review, in a vent structure for a secondary battery, an additional heat generation phenomenon at a high temperature may occur, while a phase of an electrolyte is changed, because pressure within the secondary battery constantly rises even at a boiling temperature due to a constant increase of the pressure. That is, in the vent structure for a secondary battery, an isothermal endothermic phenomenon attributable to the boiling of an electrolyte may not be effectively used to prevent the thermal runaway of the secondary battery.

In contrast, embodiments of the present disclosure are directed to providing a venting apparatus which enables a gas within a secondary battery to be discharged at specific internal pressure or more, a secondary battery, and a method of manufacturing a secondary battery. That is, according to the embodiments of the present disclosure, it is possible to prevent an internal material within a secondary battery from leaking to the outside because a spring presses the vent plate at normal times. Further, the embodiments of the present disclosure have advantages in that a gas is discharged to the outside and a pressure rise can be prevented because the vent plate is lifted up to form a vent passage when pressure within a battery rises to set pressure or more. Furthermore, there is an advantage in that the hydrophobic porous material prevents an electrolyte having a liquid state from being discharged to the outside even in the state in which the vent plate has been lifted up.

However, aspects and features of the present disclosure are not limited to those described above, and other aspects and features not mentioned will be clearly understood by a person skilled in the art from the detailed description, described above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A venting apparatus for a secondary battery, the apparatus comprising:
a spring having a top end and a bottom end;
a sub-terminal plate connected to the top end of the spring, the sub-terminal plate being under a terminal plate having a vent;
a vent plate connected to the bottom end of the spring, the vent plate having high and low positions that are changeable in response to a pressure within the secondary battery; and
a discharge preventer on an opening of a case of the secondary battery, the discharge preventer being between the vent plate and the opening of the case, and the discharge preventer being configured to prevent a discharge of a material other than a gas within the secondary battery.

2. The venting apparatus as claimed in claim 1, wherein, when the pressure within the secondary battery is a predetermined pressure or more, the vent plate is movable in a direction of the sub-terminal plate as the spring is compressed.

3. The venting apparatus as claimed in claim 2, wherein, when the pressure within the secondary battery is the predetermined pressure or more, a predetermined interval is defined between the vent plate and the discharge preventer.

4. The venting apparatus as claimed in claim 1, 2 or 3, wherein the spring sets an optimal pressure within the secondary battery through an elasticity of the spring.

5. The venting apparatus as claimed in any one of claims 1 to 4, further comprising a valve connected to the sub-terminal plate through the terminal plate.

6. The venting apparatus as claimed in claim 5, wherein the valve is configured to adjust a predetermined pressure that is a criterion for a change in the high and low positions of the vent plate in proportion to a number of rotations of the valve.

7. The venting apparatus as claimed in any preceding claim, wherein the discharge preventer includes a hydrophobic porous material.

8. A secondary battery, comprising:
an electrode assembly;
a case accommodating the electrode assembly;
a terminal plate combined with the case, the terminal plate having a vent;
a sub-terminal plate under the terminal plate;
a spring having a top connected to the sub-terminal plate;
a vent plate connected to a bottom of the spring, the vent plate having high and low positions that are changeable in response to a pressure within the secondary battery; and
a discharge preventer on an opening of the case, the discharge preventer being under the vent plate and being configured to prevent a discharge of a material other than a gas within the secondary battery.

9. The secondary battery as claimed in claim 8, wherein, when the pressure within the secondary battery is a predetermined pressure or more, the vent plate is movable in a direction of the sub-terminal plate as the spring is compressed, and optionally
wherein, when the pressure within the secondary battery is the predetermined pressure or more, a predetermined interval is defined between the vent plate and the discharge preventer.

10. The secondary battery as claimed in claim 8 or 9, wherein the spring sets an optimal pressure within the secondary battery through an elasticity of the spring, and/or
further comprising a valve connected to the sub-terminal plate through the terminal plate, and optionally
wherein the valve is configured to adjust a predetermined pressure that is a criterion for a change in the high and low positions of the vent plate in proportion to a number of rotations of the valve.

11. The secondary battery as claimed in claim 8, 9 or 10, wherein the discharge preventer includes a hydrophobic porous material.

12. A method of manufacturing a secondary battery, the method comprising:
providing an electrode assembly;
accommodating the electrode assembly in a case;
providing, on an opening of the case, a discharge preventer that prevents a discharge of a material other than a gas within the secondary battery;
providing, on the discharge preventer, a vent plate having high and low positions changed in response to pressure within the secondary battery;
providing a spring;
connecting the vent plate to a bottom of the spring;
connecting a sub-terminal plate to a top of the spring;
providing, at a top of the sub-terminal plate, a terminal plate including a vent that enables the gas within the secondary battery to be discharged; and
combining the terminal plate and the case.

13. The method as claimed in claim 12, wherein providing the vent plate includes providing the vent plate so that the vent plate is movable in a direction of the sub-terminal plate as the spring is compressed when the pressure within the secondary battery is a predetermined pressure or more.

14. The method as claimed in claim 13, wherein providing the vent plate includes providing the vent plate so that when the vent plate is movable in the direction of the sub-terminal plate, a predetermined interval is formed between the vent plate and the discharge preventer.

15. The method as claimed in any one of claims 12 to 14, wherein providing the spring includes setting an optimal pressure within the secondary battery through an elasticity of the spring, and/or
further comprising providing a valve that is connected to the sub-terminal plate through the terminal plate, and optionally
wherein providing the valve further includes adjusting a predetermined pressure that is a criterion for a change in the high and low position of the vent plate in proportion to a number of rotations of the valve.
